# EUROPÄISCHE PATENTSCHRIFT

(11) **EP 2 352 627 B1**
(45) Veröffentlichungstag und Bekanntmachung des Hinweises auf die Patenterteilung: **28.05.2014**
(21) Anmeldenummer: 09771733.4
(22) Anmeldetag: 26.11.2009
(51) Int. Cl.: B29C 45/14, F16L 33/02

(54) **KUNSTSTOFFHOHLTEIL UND VERFAHREN ZU DESSEN HERSTELLUNG**
PLASTIC HOLLOW PART AND METHOD FOR THE MANUFACTURE THEREOF
PIÈCE CREUSE EN MATIÈRE PLASTIQUE ET SON PROCÉDÉ DE PRODUCTION

(30) Priorität: 27.11.2008 DE 102008059411
(43) Veröffentlichungstag der Anmeldung: 10.08.2011
(73) Patentinhaber: Mann + Hummel GmbH, 71638 Ludwigsburg (DE)
(72) Erfinder: HANSELMANN, Markus, 74348 Lauffen a.N. (DE); JESSBERGER, Thomas, 71679 Asperg (DE); HENTSCHEL, Maik, 07646 Bubeck (DE); DANNEBERG, Horst, 37441 Bad Sachsa (DE); REGENER, Guido, 38321 Klein Denkte (DE)
(86) Internationale Anmeldenummer: PCT/EP2009/065886
(87) Internationale Veröffentlichungsnummer: WO 2010/060954

(56) Entgegenhaltungen:
- DE-A1-102006 051 774
- JP-A- 4 366 089
- JP-A- 2004 293 587
- US-A- 4 179 142
- US-A- 4 427 219

## Beschreibung

Die Erfindung betrifft ein Verfahren zum Herstellen eines Kunststoffhohlteils, bei dem über ein Blas- oder Spritzverfahren Kunststoff unter Ausbildung einer hohlen Anschlusskontur in ein Formwerkzeug eingebracht und zu einem Hohlteil ausgebildet wird. Die Erfindung betrifft ebenfalls ein Kunststoffhohlteil mit einer endseitigen Anschlusskontur zur Anbringung eines Anbauteils und einem an der Anschlusskontur angeordneten Stützelement. Das Kunststoffhohlteil ist insbesondere zur Durchleitung von Fluiden, wie Ansaugluft oder Flüssigkeiten vorgesehen, jedoch nicht darauf beschränkt.

Um beispielsweise Elastomerschläuche mit Kunststoffhohlteilen zu verbinden, werden häufig Schlauchschellen eingesetzt, um eine prozesssichere Dichtheit zwischen den beiden Komponenten zu gewährleisten. Die Kunststoffhohlteile, auf denen die Elastomerschläuche aufgesetzt werden, haben eine Anschlusskontur zur Durchleitung von Fluiden, auf die die Schlauchenden aufgesteckt werden. Da Kunststoffe unter dauerhafter Krafteinwirkung die Neigung zum Relaxieren aufweisen können, wird ein Stützring aus Metall auf der Innenseite des Kunststoffbauteiles eingesetzt. Gegen diesen Stützring stützt sich die Schlauchschelle ab und klemmt sowohl den Elastomerschlauch als auch die Anschlusskontur ein. Da die Innenkontur des Kunststoffbauteils, das in der Regel als ein Blasteil gefertigt wird, prozessbedingt relativ große Toleranzen aufweist, wird die Aufnahmekontur für den am Innenumfang der Anschlusskontur angeordneten Stützring mechanisch nachbearbeitet. Diese mechanische Nachbearbeitung erfolgt durch einen spanenden Prozess, zum Beispiel durch eine Stufenbohrung oder eine Ausspindelung.

Bei allen spanenden Nachbearbeitungsverfahren entstehen Späne unterschiedlichster Ausprägung. Da die Späne nicht prozesssicher abgeführt werden können, besteht die Gefahr, dass ein Teil der Späne im Bauteil verbleibt. Bei einigen Anwendungen können Restspäne unschädlich sein, bei dem Einsatz von Komponenten im Reinluftbereich sind Späne jedoch nicht akzeptabel, da diese direkt beispielsweise dem Verbrennungsmotor zugeführt werden und dort Schäden anrichten können. So kann es beispielsweise zu Ablagerungen oder Beschädigungen am Turbolader kommen, was in der Folge zum Ausfall des Turboladers führen kann. Bei der Verwendung von Kunststoffen mit einem Glasfaseranteil können Ablagerungen der Glasfasern aus den Spänen zwischen dem Kolbenring und der Zylinderlaufbuchse auftreten, was zu einer Leckage und deshalb zu einem Leistungsverlust des Motors führt.

Die Schrift gattungsbildende JP 2004 293587 A offenbart ein Verfahren zur Umspritzung eines Gewindestücks in einem Kunststoffspritzgussteil. Die JP 04 366089 A offenbart ein Verfahren zur Herstellung eines Kunststoffteiles im Spritzgussverfahren bei dem eine Metallmutter in das Werkzeug eingelegt wird.

Aus der DE 10 2006 051774 A1 ist ein Fitting für ein Metallrohr, das mit einer Kunststoffschicht überzogen ist, bekannt. Die US 4 127 219 A zeigt eine Klemmkupplung für eine Rohrverbindung. In ein Kunststoffrohr wird ein Verstärkungsteil eingeschoben.

Aufgabe der Erfindung ist es, ein Verfahren zur Herstellung eines Kunststoffhohlteils und ein Kunststoffhohlteil bereitzustellen, mit dem eine Gefährdung nachfolgender Komponenten ausgeschlossen wird und die eine schnelle und prozesssichere Fertigung zulassen.

Erfindungsgemäß wird diese Aufgabe durch ein Verfahren mit den Merkmalen des Anspruchs 1 und ein Kunststoffhohlteil mit den Merkmalen des Anspruchs 9 gelöst. Vorteilhafte Ausgestaltungen und Weiterbildungen der Erfindung sind in den jeweiligen Unteransprüchen aufgeführt.

Das erfindungsgemäße Verfahren zum Herstellen eines Kunststoffhohlteils, bei dem über ein Blasverfahren Kunststoff unter Ausbildung einer hohlen Anschlusskontur in ein Formwerkzeug eingebracht und zu einem Hohlteil ausgebildet wird, sieht vor, dass ein Stützring im Bereich der Anschlusskontur eingeformt wird. Das Einformen des Stützringes erübrigt eine spanende Nachbearbeitung des Kunststoffhohlteils bzw. der Anschlusskontur, so dass einerseits eine stabile Befestigung des Anbauteils auf der Anschlusskontur und eine Sicherung durch eine Schlauchschelle oder dergleichen zuverlässig und über eine lange Zeitdauer erfolgen kann. Durch das Vermeiden von Spänen bei der Einbringung oder Anbringung des Stützelementes ist sichergestellt, dass die nachfolgenden Komponenten im eingebauten Zustand keiner Gefährdung durch Kunststoffe oder Glasfasern ausgesetzt sind.

Eine Variante der Erfindung sieht vor, dass der Stützring vor dem Einbringen des Kunststoffes in das Formwerkzeug, also in das Blaswerkzeug, eingelegt und von innen mit dem Kunststoff umgeben wird. Der Stützring bildet also den äußeren Abschluss und äußeren Umfang zumindest eines Teils der Anschlusskontur, wodurch besonders wirksam eine hohe Maßgenauigkeit der Anschlusskontur festgelegt wird, da der Stützring in der Regel aus einem Metall ausgebildet ist, das eine hohe Maßhaltigkeit aufweist.

Eine Variante der Erfindung sieht vor, dass der Stützring mit einem Kunststoffhohlteil unter Ausbildung eines Freiraumes in ein Spritzgießwerkzeug eingelegt und zu dem Kunststoffhohlteil positioniert gehalten wird. Anschließend wird in dem Freiraum zwischen dem Stützring und dem Kunststoffhohlraum eine Füllmasse eingebracht, die zum Ausfüllen des Freiraumes vorgesehen wird. Danach wird das fertige Kunststoffhohlteil der Spritzgießform entnommen. Der Stützring liegt dabei an dem inneren Umfang der Anschlusskontur, während die Füllmasse einerseits eine formschlüssige und stoffschlüssige Sicherung des Stützringes an dem Kunststoffhohlteil, genauer gesagt der Anschlusskontur, bewirkt und andererseits Toleranzen zwischen der Außenkontur des Stützringes und der Innenkontur der Anschlusskontur ausgleicht. Diese Toleranzen treten auf, da die Innenkontur eines im Blasverfahren hergestellten Kunststoffhohlteiles gewissen Schwankungen unterworfen ist.

Zur sicheren Positionierung des Stützringes innerhalb der Anschlusskontur und relativ zu dem Kunststoffhohlteil ist vorgesehen, dass der Stützring auf einem Schieber gehalten wird, der in Richtung auf das Kunststoffhohlteil verfahren wird. Bevorzugt wird der Schieber gegen das Kunststoffhohlteil verfahren, bis der Schieber an dem Kunststoffhohlteil anliegt, so dass keine Füllmasse in das Kunststoffhohlteil jenseits des Schiebers eindringen kann. Der Schmelzpunkt des Füllmaterials kann dabei so gewählt werden, dass die Oberfläche des Kunststoffhohlteils angeschmolzen wird, so dass beide Werkstoffe eine stoffschlüssige Verbindung miteinander eingehen. Dabei wird der Stützring innerhalb des Kunsfistoffhohfteils angeordnet und von außen mit der Füllmasse umgeben, bevorzugt liegt der Stützring eng auf dem Schieber auf, so dass keine Füllmasse zwischen den Schieber und den Stützring dringen kann; der Stützring bildet somit den inneren Abschluss der Anschlusskontur.

Als eine Alternaive oder Ergänzung zu der stoffschlüssigen Verbindung zwischen Füllmasse und dem Material des Kunststoffhohlteils ist es vorgesehen, dass die Schrumpfung der beiden Materialien so aufeinander abgestimmt werden, dass die Nachschrumpfung des Kunststoffhohlteils und der Anschlusskontur größer als die Schrumpfung des Füllmaterials wird. Dadurch werden der Stützring und das Füllmaterial innerhalb des Kunststoffhohlteils und der Anschlusskontur während des Abkühlens festgeschrumpft.

Grundsätzlich ist es auch möglich, dass in dem Kunststoffhohlteil im Bereich der Anschlusskontur zumindest eine Hinterschneidung ausgebildet ist, die von der Füllmasse zumindest teilweise ausgefüllt wird, so dass neben einer stoffschlüssigen und einer kraftschlüssigen Verbindung und Sicherung der Füllmasse in der Anschlusskontur und damit des Stützringes in der Anschlusskontur auch eine formschlüssige Sicherung realisiert werden kann.

Eine Variante eines erfindungsgemäßen Kunststoffhohlteils mit einer endseitigen Anschlusskontur zur Anbringung eines Anbauteils und einem an der Anschlusskontur angeordneten Stützelement sieht vor, dass das Stützelement am Innenumfang der Anschlusskontur angeordnet ist und zwischen dem Stützelement und dem Kunststoffhohlteil eine Füllmasse eingespritzt ist, die das Stützelement an der Anschlusskontur sichert. In einer Weiterbildung ist zumindest eine Hinterschneidung in der Anschlusskontur vorgesehen, in die Füllmasse eingespritzt ist, bevorzugt ist die Hinterschneidung von der Füllmasse ausgefüllt, so dass eine formschlüssige Verbindung zwischen der Füllmasse und dem Kunststoffmaterial des Kunststoffhohlteils ausgebildet wird.

Nachfolgend werden Ausführungsbeispiele der Erfindung anhand von Zeichnungen näher erläutert. Es zeigen:
- Figur 1: eine schematische Detailansicht einer Anschlusskontur, in Schnittdarstellung;
- Figur 2: eine Detailansicht in Schnittdarstellung einer Anschlusskontur mit Füllmasse zum Toleranzausgleich; sowie
- Figur 3: eine Variante der Figur 2.

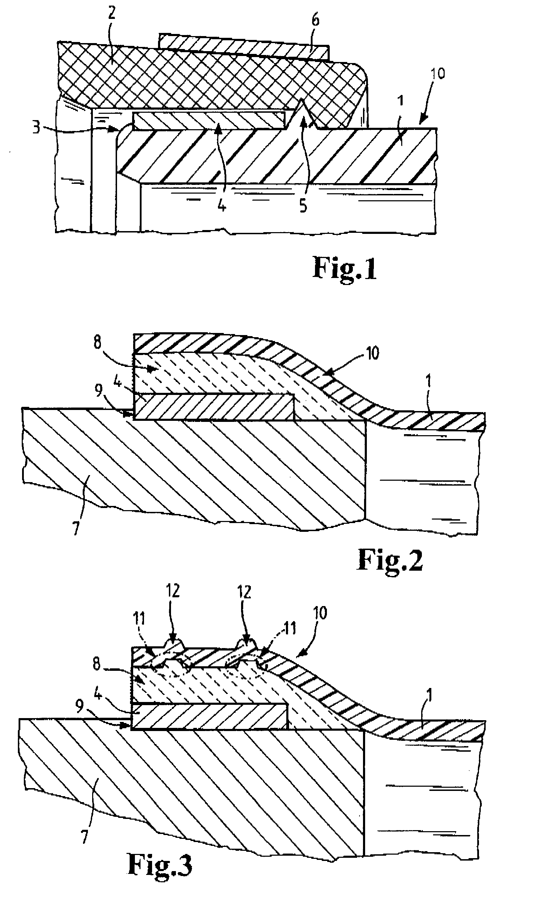

In Figur 1 ist ein Kunststoffhohlteil 1 mit einer Anschlusskontur 10 und einem daran montierten Anbauteil 2 in Gestalt eines Elastomerschlauches dargestellt. Der Elastomerschlauch 2 ist über die Anschlusskontur 10, die beispielsweise als ein Stutzen oder ein Flansch ausgebildet ist, geschoben und dient zur Verbindung des Elastomerschlauches 2 mit dem Kunststoffhohlteil 1. Das Kunststoffhohlteil 1 ist als ein Kunststoffblasteil ausgebildet und weist einen innen liegenden Hohlraum auf, der insbesondere zur Durchleitung von Fluiden, wie Ansaugluft oder dergleichen dient. An der Anschlusskontur 10 ist eine stirnseitige Sicherungskontur 3 vorgesehen, die in dem dargestellten Ausführungsbeispiel als ein umlaufender Rand ausgebildet ist. Die Sicherungskontur 3 kann auch in Gestalt von einzelnen, radial vorstehenden Vorsprüngen ausgebildet sein, so dass kein umlaufender Steg, sondern unterbrochene Stegabschnitte an der Stirnseite der Anschlusskontur 10 vorhanden sind. Die Sicherungskontur 3 kann zusammen mit dem Kunststoffhohlteil 1 im Blaswerkzeug angeformt sein oder nachträglich aufgebracht werden, beispielsweise durch thermisches Prägen oder durch Anspritzen. In einer axialen Entfernung zu der Sicherungskontur 3 ist eine Dichtschulter 5, vorliegend eine umlaufende Dichtschulter 5 an dem Kunststoffhohlteil 1 und der Anschlusskontur 10 ausgebildet. Die umlaufende Dichtschulter weist einen dreieckigen Querschnitt auf und weist eine gewisse radiale Erstreckung von der Anschlusskontur 10 auf. Zwischen der Sicherungskontur 3 und der Dichtschulter 5 ist ein Stützelement 4 in Gestalt eines Stützringes auf der Anschlusskontur 10 angeordnet. Der Stützring 4 liegt am Außenumfang auf der Anschlusskontur 10 auf und dient zur Aufnahme von radial wirkenden Kräften. Der Stützring 4 kann in einem Presssitz außen auf dem Kunststoffhohlteil 1 montiert sein, ebenfalls ist es möglich, dass der Stützring 4 außen auf der Anschlusskontur 10 eingeformt ist, indem der Stützring 4 vor dem Einblasen des Kunststoffmaterials in das Blaswerkzeug eingelegt und zumindest teilweise von dem Kunststoffmaterial umgeben wird.

Das Anbauteil 2 in Gestalt des Elastomerschlauches erstreckt sich über die Sicherungskontur 3, den Stützring 4 und die umlaufende Dichtschulter 5 und wird auf der Anschlusskontur 10 über eine Schelle 6, vorliegend eine Schlauchschelle, gehalten. Die Schlauchschelle 6 ist im vorliegenden Ausführungsbeispiel so angeordnet, dass sie axial oberhalb der Dichtschulter 5 angeordnet ist und das Anbauteil 2 in Richtung auf die Dichtschulter 5 drückt. Dadurch wird die spitzwinklig ausgebildete Dichtschulter 5 in das Anbauteil 2 hineingedrückt, so dass ein teilweiser Formschluss erzeugt wird, der die Abzugskräfte zwischen dem Anbauteil 2 und dem Kunststoffhohlteil 1 erhöht. Die Schlauchschelle 6 ist ebenfalls oberhalb des Stützelementes 4 angeordnet, so dass das Anbauteil 2 zwischen dem Stützelement 5 und der Schlauchschelle 6 eingeklemmt ist.

Durch die sehr präzise Festlegung der Außenkontur der Anschlusskontur 10 durch das Blaswerkzeug wird in der Regel eine Nachbearbeitung der Anlagefläche des Stützrings 4 auf der Anschlusskontur 10 nicht notwendig sein. Der Stützring 4 kann von außen auf die Anschlusskontur 10 aufgeschoben werden, bis er an der Dichtschulter 5 anliegt. Die Sicherungskontur 3 sichert dann den Stützring 4 gegen ein Herunterfallen bzw, ein Herunterrutschen während des Transports vor der Montage.

Alternativ zu einer Schlauchschelle können auch andere Sicherungselemente vorgesehen sein, die das Anbauteil 2 auf der Anschlusskontur 10 sichern und radial wirkende Kräfte auf die Anschlusskontur 10 ausüben. Die Sicherungskontur 3 kann auch nach dem Aufschieben des Stützringes aufgebracht werden, beispielsweise durch thermisches Prägen.

In Figur 2 ist eine Variante der Erfindung mit einer Anschlusskontur 10 dargestellt, die im dargestellten Ausführungsbeispiel keine umlaufende Dichtschulter und keinen außenliegenden Stützring aufweist. Ebenfalls ist das Anbauteil nicht dargestellt, das beispielsweise als ein Elastomerschlauch ausgebildet sein kann. Dargestellt ist das Kunststoffhohlteil 1 in einem nicht näher gezeigten Spritzgießwerkzeug mit einem innenseitig angeordneten Schieber 7, der stirnseitig gegen das Kunststoffhohlteil 1 dichtend anstößt. Zwischen dem Schieber 7 und der Innenkontur der Anschlusskontur 10 ist ein Freiraum ausgebildet, der mit einer Füllmasse 8 ausgefüllt ist. Die Füllmasse 8 dient einerseits zum Toleranzausgleich zwischen dem innen angeordneten Stützring 4 und der Innenkontur der Anschlusskontur 10 und andererseits zur Festlegung des Stützringes 4 an dem Kunststoffhohlteil 1. Nachdem der Schieber 7, auf dem der Stützring 4 angeordnet ist und sich axial gegen eine Schulter 9 abstützt, gegen das Kunststoffhohlteil 1 verfahren wird, wird eine Füllmasse 8, bevorzugt aus Kunststoff, in den Freiraum zwischen dem Außenumfang des Stützringes 4 und dem Innenumfang der Anschlusskontur 10 eingespritzt. Dabei kann zum sicheren Halt des Stützringes 4 und zur Eliminierung eines Spiels der Schmelzpunkt der Füllmasse 8 so gewählt werden, dass der Kunststoff des Kunststoffhohlteils 1 angeschmolzen wird. Auf diese Weise können beide Werkstoffe miteinander eine Verbindung eingehen, so dass die Füllmasse 8 stoffschlüssig an dem Kunststoff der Anschlusskontur 10 festgelegt ist.

Der Schieber 7 dichtet dabei das Kunststoffhohlteil 1 gegenüber einem Eindringen der Füllmasse 8, die in einem Spritz- oder Gießverfahren eingebracht wird, ab. Der Stützring 4 wird in der Füllmasse 8 sicher gehalten, beispielsweise indem an seiner Außenkontur Hinterschneidungen oder dergleichen angebracht sind, die von der Füllmasse 8 umgeben werden. Ebenfalls kann durch einen Schrumpfungsprozess der Füllmasse der Stützring 4 sicher in der Füllmasse 8 gehalten werden. Alternativ zu einer stoffschlüssigen Verbindung zwischen der Füllmasse 8 und dem Kunststoff der Anschlusskontur 10 ist es möglich, dass die Schrumpfungen beider Materialien so aufeinander abgestimmt werden, dass beim Abkühlen des fertiggestellten Kunststoffhohlteils 1 der Kunststoff der Anschlusskontur 10 mehr nachschrumpft als die Füllmasse 8, so dass sowohl der Stützring 4 als auch die Füllmasse 8 in dem Bauteil während des Abkühlens festgeschrumpft werden. Da der Stützring 4 in der Regel aus einem Metall hergestellt ist, ist die Schrumpfung beim Abkühlen in der Regel wesentlich geringer als die der Füllmasse 8 und des Kunststoffhohlteils 1, so dass der Stützring 4 zusätzlich eingeschrumpft wird.

In Figur 3 eine Variante der Erfindung dargestellt, die als Alternative oder Ergänzung zu der stoffschlüssigen Variante gemäß Figur 2 eingesetzt werden kann und die Hinterschnitte 11 im Bereich des Innenumfanges der Anschlusskontur 10 vorsieht. Diese Hinterschnitte 11 können eingeprägt sein, wobei auf dem Außenumfang der Anschlusskontur Formschlusselemente 12 als beispielsweise umlaufende Ringe ausgebildet sein können, die zur Sicherung des Anbauteils, das nicht dargestellt ist, dienen können. In die Hinterschnitte 11 wird die Füllmasse 8 eingegossen oder eingespritzt, so dass eine zusätzliche Sicherung gegen ein Herausrutschen der Füllmasse und damit des Stützringes 4 aus der Anschlusskontur 10 erfolgt.

Auch bei den Varianten gemäß der Figuren 2 und 3 können Sicherungsschultern und Dichtschultern vorgesehen sein. Die Geometrie des Stützringes 4 ist nicht auf einen Kreisring beschränkt, andere Konturen des Stützringes sind ebenfalls vorgesehen, wenn dies die Anschlusskontur erforderlich macht.

## Patentansprüche

1. Verfahren zum Herstellen eines Kunststoffhohlteiles, bei dem Kunststoff unter Ausbildung einer hohlen Anschlusskontur in ein Formwerkzeug eingebracht und zu einem Hohlteil ausgebildet wird, **dadurch gekennzeichnet, dass** das Kunststoffhohlteil (1) in einem Blasverfahren ausgebildet wird und dass ein Stützring (4) im Bereich der Anschlusskontur (10) eingeformt wird.

2. Verfahren nach Anspruch 1, **dadurch gekennzeichnet, dass** der Stützring (4) vor dem Einbringen des Kunststoffes in das Formwerkzeug eingelegt und von innen mit dem Kunststoff umgeben wird.

3. Verfahren nach Anspruch 1, **dadurch gekennzeichnet, dass** der Stützring (4) mit dem Kunststoffhohlteil (1) unter Ausbildung eines Freiraumes in ein Spritzgießwerkzeug eingelegt und zu dem Kunststoffhohlteil (1) positioniert gehalten wird und dass in den Freiraum eine Füllmasse (8) zum Ausfüllen des Freiraumes eingebracht wird.

4. Verfahren nach Anspruch 3, **dadurch gekennzeichnet, dass** der Stützring (4) auf einem Schieber (7) gehalten wird, der gegen das Kunststoffhohlteil (1) verfahren wird.

5. Verfahren nach Anspruch 4, **dadurch gekennzeichnet, dass** der Stützring (4) innerhalb des Kunststoffhohlteiles (1) angeordnet und von außen mit der Füllmasse (8) umgeben wird.

6. Verfahren nach einem der Ansprüche 3 bis 5, **dadurch gekennzeichnet, dass** die Füllmasse das Hohlteil (1) anschmilzt und eine stoffschlüssige Verbindung mit dem Kunststoff eingeht.

7. Verfahren nach einem der Ansprüche 3 bis 5, **dadurch gekennzeichnet, dass** die Füllmasse den Stützring (4) durch Schrumpfung sichert.

8. Verfahren nach einem der Ansprüche 3 bis 7, **dadurch gekennzeichnet, dass** in dem Hohlteil (1) zumindest eine Hinterschneidung (11) ausgebildet ist, die von der Füllmasse (8) zumindest teilweise ausgefüllt wird.

9. Kunststoffhohlteil mit einer endseitigen Anschlusskontur zur Anbringung eines Anbauteiles **dadurch gekennzeichnet, dass** das Kunststoffhohlteil (1) als Kunststoffblasteil ausgebildet ist und dass ein Stützelement (4) im Bereich der Anschlusskontur (10) eingeformt ist.

10. Kunststoffhohlteil nach Anspruch 9, **dadurch gekennzeichnet, dass** das Stützelement (4) an dem Innenumfang der Anschlusskontur (10) angeordnet ist und zwischen dem Stützelement (4) und der Anschlusskontur (10) eine Füllmasse (8) eingespritzt ist.

11. Kunststoffhohlteil nach Anspruch 10, **dadurch gekennzeichnet, dass** zumindest eine Hinterschneidung (11) in der Anschlusskontur (10) vorhanden ist, in der die Füllmasse (8) eingespritzt ist.

## Claims

1. Method for manufacturing a hollow plastic part during which plastic is introduced into a molding tool by forming a hollow connection contour and realized as a hollow part, **characterized in that** the hollow plastic part (1) is realized by a blow molding process and that a supporting ring (4) is molded in the area of the connection contour (10).

2. Method according to claim 1, **characterized in that** the supporting ring (4) is placed into the molding tool before introducing the plastic and surrounded from the inside by the plastic.

3. Method according to claim 1, **characterized in that** the supporting ring (4) with the hollow plastic part (1) is inserted into an injection molding tool by forming a free space and held in position in relation to the hollow plastic part (1) and that a filling compound (8) is introduced into the free space for filling the free space.

4. Method according to claim 3, **characterized in that** the supporting ring (4) is held on a slider (7) which is moved against the hollow plastic part (1).

5. Method according to claim 4, **characterized in that** the supporting ring (4) is disposed within the hollow plastic part (1) and surrounded from the outside by the filling compound (8).

6. Method according to one of the claims 3 to 5, **characterized in that** the filling compound incipiently melts the hollow part (1) and realizes a bonded connection with the plastic.

7. Method according to one of the claims 3 to 5, **characterized in that** the filling compound secures the supporting ring (4) by shrinking.

8. Method according to one of the claims 3 to 7, **characterized in that** at least one undercut (11), which is at least partially filled by the filling compound (8), is realized in the hollow part (1)

9. Hollow plastic part with a connection contour on either end for attaching an add-on part, **characterized in that** the hollow plastic part (1) is designed as blow-molded plastic part and that the support member (4) is molded in the area of the connection contour (10).

10. Hollow plastic part according to claim 9, **characterized in that** the support member (4) is disposed at the inner periphery of the connection contour (10) and that a filling compound (8) is injected between the support member (4) and the connection contour (10).

11. Hollow plastic part according to claim 10, **characterized in that** at least one undercut (11) is provided in the connection contour (10) into which the filling compound (8) is injected.

## Revendications

1. Procédé de fabrication d'une pièce creuse en plastique dans lequel la matière plastique est introduite dans un outil de formage en formant un contour de raccordement creux et formée en une pièce creuse, **caractérisé en ce que** la pièce creuse en plastique (1) est obtenue par soufflage et qu'une bague d'appui (4) est formée dans la zone du contour de raccordement (10).

2. Procédé selon la revendication 1, **caractérisé en ce que** la bague d'appui (4) est introduite dans l'outil de formage avant l'introduction de la matière plastique et est enrobée de l'intérieur de plastique.

3. Procédé selon la revendication 1, **caractérisé en ce que** la bague d'appui (4) est introduite avec la pièce creuse en plastique (1) dans un outil de moulage par injection, ce qui génère un interstice, et est maintenue en position par rapport à la pièce creuse en plastique (1), et qu'une masse de remplissage (8) est introduite dans l'interstice afin de remplir cet interstice.

4. Procédé selon la revendication 3, **caractérisé en ce que** la bague d'appui (4) est maintenue sur une pièce coulissante (7) qui est déplacée contre la pièce creuse en plastique (1).

5. Procédé selon la revendication 4, **caractérisé en ce que** la bague d'appui (4) est placée à l'intérieur de la pièce creuse en plastique (1) et est enrobée de l'extérieur de la masse de remplissage (8).

6. Procédé selon l'une des revendications 3 à 5, **caractérisé en ce que** la masse de remplissage fait fondre la pièce creuse (1) et génère une liaison par pénétration de matière avec la matière plastique.

7. Procédé selon l'une des revendications 3 à 5, **caractérisé en ce que** la masse de remplissage fixe la bague d'appui (4) par rétraction.

8. Procédé selon l'une des revendications 3 à 7, **caractérisé en ce qu'**au moins une entaille (11) qui est remplie, au moins en partie, par la masse de remplissage (8) est exécutée dans la pièce creuse (1).

9. Pièce creuse en plastique avec un contour de raccordement à chaque extrémité permettant de monter une pièce d'assemblage, **caractérisée en ce que** la pièce creuse en plastique (1) est exécutée comme pièce soufflée en plastique et qu'un élément de soutien (4) est formé dans la zone du contour de raccordement (10).

10. Pièce creuse en plastique selon la revendication 9, **caractérisée en ce que** l'élément de soutien (4) est disposé sur la circonférence intérieure du contour de raccordement (10) et qu'une masse de remplissage (8) est injectée entre l'élément de soutien (4) et le contour de raccordement (10).

11. Pièce creuse en plastique selon la revendication 10, **caractérisée en ce qu'**au moins une entaille (11) dans laquelle est injectée la masse de remplissage (8) est ménagée dans le contour de raccordement (10).
